# EUROPÄISCHE PATENTSCHRIFT

(11) **EP 1 654 889 B1**
(45) Veröffentlichungstag und Bekanntmachung des Hinweises auf die Patenterteilung: **09.04.2008**
(21) Anmeldenummer: 04731020.6
(22) Anmeldetag: 04.05.2004
(51) Int. Cl.: H04Q 3/00, H04Q 11/04

(54) **VERFAHREN ZUR STEUERUNG VON ISDN ENDGERÄTEN, DIE PAKETBASIERT ÜBER EIN INTERNETNETZ ANGESCHLOSSEN SIND**
METHOD FOR CONTROLLING ISDN TERMINALS WHICH ARE CONNECTED VIA AN INTERNET NETWORK IN A PACKET-BASED MANNER
PROCEDE POUR COMMANDER DES TERMINAUX RNIS RACCORDES EN MODE PAQUET VIA UN RESEAU INTERNET

(30) Priorität: 11.08.2003 DE 10336860
(43) Veröffentlichungstag der Anmeldung: 10.05.2006
(73) Patentinhaber: Nokia Siemens Networks GmbH & Co. KG, 81541 München (DE)
(72) Erfinder: HENZ, Volker, 85726 Unterschleissheim (DE); GNADL, Stefan, 81379 München (DE)
(86) Internationale Anmeldenummer: PCT/EP2004/050690
(87) Internationale Veröffentlichungsnummer: WO 2005/018248

(56) Entgegenhaltungen:
- VYDYAM A ET AL: "DPNSS/DASS 2 extensions to the IUA protocol <draft-ietf-sigtran-dua-00.txt>" INTERNET-DRAFT, INTERNET ENGINEERING TASK FORCE, Juli 2001 (2001-07), Seiten 1-10, XP002300691
- K. MORNEAULT: "ISDN Q.921 - User Adaptation Layer" RFC 3057, Februar 2001 (2001-02), Seiten 1-66, XP002300692 in der Anmeldung erwähnt
- PATENT ABSTRACTS OF JAPAN Bd. 0176, Nr. 49 (E-1468), 2. Dezember 1993 (1993-12-02) & JP 5 211502 A (NEC CORP), 20. August 1993 (1993-08-20)

## Beschreibung

Die Erfindung betrifft ein Verfahren gemäss dem Oberbegriff von Patentanspruch 1.

Steuerungsverfahren für ISDN-Endgeräte sind aus Vydyan A. et al. ("DPNSS/DASS 2 extensions to the IUA protocol", Internet-Draft, IETF, Juli 2001) und Morneault K. ("ISDN Q.921 - User Adaption Layer" RFC 3057, Februar 2001) bekannt. Diese Schriften offenbaren einen Mechanismus für den Transport von DPNSS / DASS 2 / ISDN Q.921 - Meldungen über IP bei Benutzung von SCTP (Stream Control Transmission Protocol) bzw. Erweiterung von IUA (ISDN User Adaption Layer Protocol).

Neuere Kommunikationsarchitekturen, die paket- oder zellbasierte Verfahren zur Sprachsignalübertragung wie beispielsweise Voice over IP (VoIP) oder Voice over ATM (VoATM) nutzen, sehen die Trennung der Übertragung von Signalisierungsinformationen und Nutzinformationen vor.

Hierzu werden die vermittlungstechnischen Netzwerke in Einheiten, die dem Transport der Nutzinformationen (Träger oder Bearer) dienlich sind sowie in Einheiten zur Steuerung dieser Nutzverbindungen (Bearer Control) aufgeteilt. Um eine Kommunikation mit herkömmlichen leitungsvermittelten Telekommunikationsnetzen bzw. PSTNs (Public Switched Telephone Networks) weiterhin zu ermöglichen, ist eine "Übersetzung" zwischen diesen beiden unterschiedlichen Kommunikationsarchitekturen erforderlich, die in den Kopplungspunkten vorgenommen wird.

An einem solchen Kopplungspunkt werden die Nutzverbindungen mittels spezieller, als Media Gateways (MG) bezeichneten Servern in die benutzte Transporttechnologie umgewandelt. Media Gateways besitzen sowohl Schnittstellen zu PSTN/ ISDN- als auch IP/ ATM-Netzwerken und bilden damit die Schnittstellen zwischen leitungsvermittelnden und paketorientierten Netzen. Sie können in Echtzeit TDM (Time Division Multiplexing)-Sprachdaten in VoIP/ VoATM-Daten umwandeln und umgekehrt.

Die Media Gateways werden von zentralen Instanzen, den Media Gateway Controllern (MGC), gesteuert. Diese dienen im wesentlichen der Koordination der Media Gateways und überwachen/ steuern Verbindungen (Bearerverbindungen) zwischen den Media Gateways. Die Steuerung erfolgt aufgrund des MGCP (Media Gateway Controller Protocol) oder auch des H.248-Protokolls.

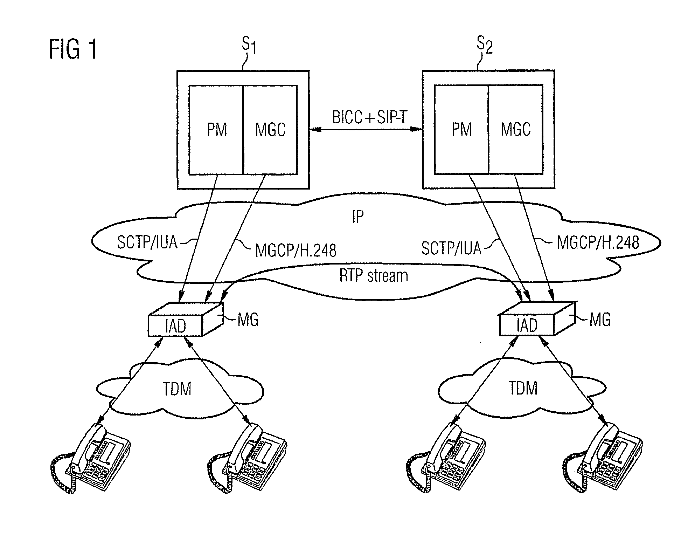

Die bislang über herkömmliche leitungsvermittelte Telekommunikationsnetze geführte Kommunikation zwischen ein/ mehreren Teilnehmern wie beispielsweise ISDN Teilnehmern wird somit über IP Netze geführt. Als Endgeräte werden herkömmliche ISDN Endgeräte eingesetzt. Die von diesen Endgeräten ausgehenden Signalisierungs-/ Nutzinformationen sind in den bereits angesprochenen Media Gateways in IP Informationen umzusetzen. Die grundsätzlichen Verhältnisse für ISDN-Teilnehmern, zwischen denen ein Internetnetz IP angeordnet ist, sind Fig. 1 entnehmbar.

Im Rahmen von Voice over DSL (VoDSL) (Sprach-) Übertragungen werden Abschlusseinrichtungen IAD (Integrated Access Devices) zum Anschluss der ISDN Telefone eingesetzt. Die Abschlusseinrichtungen IAD weisen hierbei die Funktionalität von Media Gateways auf. Zum Schalten der Sprache wird das MGCP Protokoll (Media Gateway Control Protocol) RFC 3435 verwendet. Von den Abschlusseinrichtungen IAD bis zu den ISDN Endgeräten wird das bekannte ISDN Protokoll verwendet.

Grundsätzlich ist das ISDN Protokoll aus insgesamt 3 Schichten aufgebaut, wobei in Schicht 2 Q.921 informationen und in Schicht 3 Q.931 Informationen übertragen werden, die als Signalisierungsinformationen ausgebildet sind (Schicht 1 ist die physikalische Schicht). Im Media Gateway IAD werden nun diese Informationen in ein Internetprotokoll IUA (ISDN Q.921 - User Adaptation RFC 3057) umgesetzt und über das SCTP (Stream Control Transfer Protocol (RFC 2960)) Transport-Protokoll einem Softswitch S₁ zugeführt. Letzterer weist sowohl eine MGC Funktionalität als auch eine Funktionalität zum Abschluss der ISDN Schicht 3 auf. Vom Softswitch S₁ werden die Signalisierungsfunktionen einem Softswitch S₂ der B-Seite zuführt. Das Media Gateway IAD schließt das bei ISDN verwendete Layer 2 Protokoll ab und ist damit auch zuständig für den Abschluss der Layer 2 Verbindungen. Dies bedeutet, dass vom Media Gateway IAD auch sogenannte Terminal Endpoint Identifiers TEI vergeben und gepflegt werden. Hierbei handelt es sich um Zahlenwerte im Wertebereich zwischen 0...127, die repräsentativ für den Anschluss der ISDN Endgeräte am S₀ Bus sind. Über die TEI können die einzelnen Endgeräte am ISDN Bus jederzeit identifiziert werden.

Falls nun im Internetnetz IP (IP Netz) Verbindungen unterbrochen werden, wird dies im Softswitch bemerkt, der daraufhin eine Meldung MGCP TIME OUT den Media Gateways zukommen lässt. Die Bearerverbindungen werden daraufhin heruntergefahren. Die ISDN B-Kanäle laufen dann zwar ins Leere, die Teilnehmer würden aber den Ausfall bemerken und durch Auflegen des Hörers auch die ISDN Seite zurücksetzen.

Problematisch ist jedoch der Fall eines gravierenden Fehlers wie beispielsweise ein Totalausfall in einem der Softswitche selbst. Hier ist es notwendig, alle bestehenden Verbindungen am Media Gateway IAD auszulösen. Für die Bearerverbindungen erfolgt dies auch - wie vorstehend beschrieben - durch die Meldung MGCP TIME OUT. Nach dem erneuten Hochfahren des Softswitches sind die TEI aber nicht mehr bekannt, womit die unterbrochenen Signalisierungsverbindungen auch nicht mehr ausgelöst werden können, da das Wissen über diese Verbindungen und ihre Endpunkte nicht mehr vorhanden ist. Im konkreten Fall bedeutet dies, dass der Totalausfall eines Softswitches während des Anläutens (Klingelphase) eines gerufenen ISDN Teilnehmers durch den rufenden ISDN Teilnehmer dazu führt, dass die Signalisierungsverbindung nicht abgeschaltet wird und somit der Klingelton dauerhaft angelegt bleibt.

Das gleiche Problem kann übrigens auch auftreten, wenn im Softswitch der Port eines Media Gateways IAD umkonfiguriert wird, es sollen aber nur die Gespräche dieses Ports ausgelöst werden, nicht aber alle Gespräche des Media Gateway IAD.

Eine Möglichkeit zur Beseitigung dieses Problems besteht darin, für jeden möglichen TEI eines ISDN Ports eine eigene Layer 2 Auslösemeldung (z. B. DL_REL_REQ Data Link Release Request) zu senden. Der TEI Wertebereich erstreckt sich allerdings von 1 bis 127, was diesen Ansatz als unpraktikabel erscheinen lässt.

Der Erfindung liegt die Aufgabe zugrunde, einen Weg aufzuzeigen, wie nach dem Auftreten eines Fehlers im Switch alle Verbindungen in effizienter Weise ausgelöst werden können.

Diese Aufgabe wird ausgehend von den im Oberbegriff von Patentanspruch 1 angegebenen Merkmalen durch die im kennzeichnenden Teil beanspruchten Merkmale gelöst.

Ein wesentlicher Vorteil der Erfindung ist darin zu sehen, dass eine neue Meldung im IUA Protokoll eingeführt wird. Diese Meldung bewirkt, dass alle Layer 2 Verbindungen eines Ports auf einem Media Gateway ausgelöst werden. Mit der Einführung der neuen Meldung können alle Verbindungen eines ISDN Ports an einem IAD ausgelöst werden, es bringt einen erheblichen Geschwindigkeitsvorteil wenn es sich bei diesem Vorgang um die Bereinigung ganzer Blöcke von Ports handelt, wie es z. B. beim Umkonfigurieren ganzer Interfaces mit vielen Ports vorkommt.

Bevorzugte Ausgestaltungen der Erfindung ergeben sich aus den abhängigen Ansprüchen.

Die Erfindung wird im folgenden anhand eines figürlich dargestellten Ausführungsbeispiels näher erläutert.

Es zeigen:
- Figur 1: die grundsätzlichen Verhältnisse zwischen 2 ISDN-Teilnehmern, zwischen denen ein Internetnetz IP angeordnet ist,
- Figur 2: die Steuerung der Meldungen gemäss der Erfindung

Im folgenden wird davon ausgegangen, dass ein ISDN Teilnehmer der A-Seite (rufender ISDN Teilnehmer) eine Verbindung zu einem der ISDN Teilnehmer der B-Seite (gerufene ISDN Teilnehmer) aufzubauen wünscht. Demgemäss wird zunächst vom rufenden ISDN Teilnehmer eine ISDN Meldung SETUP gesendet. Am zugeordneten Media Gateway IAD wird diese Meldung entgegengenommen und in das IUA Internetprotokoll eingebunden. Beides zusammen wird dann über das Internetprotokoll SCTP einem Softswitch S₁ mit MGC Funktionalität zugeführt, welcher die erhaltenen Signalisierungsinformationen der B-Seite zur Verfügung stellt, wo die ISDN Meldung SETUP dem gerufenen ISDN Teilnehmer übertragen wird. Zeitgleich hierzu wird von der A-Seite zur B-Seite zwischen den beiden betroffenen Media Gateways IAD eine zunächst unidirektionale Bearerverbindung erstellt. Somit existieren zum Zeitpunkt des Anläutens zunächst eine (unidirektionale) Bearerverbiundung sowie eine Signalisierungsverbindung. Als Konsequenz wird beim gerufenen ISDN Teilnehemr ein Klingelton angelegt, den der rufende ISDN Teilnehmer über die unidirektionale Bearerverbindung höhrt.

Im folgenden soll nun davon ausgegangen werden, dass genau in diesem Zeitpunkt der Softswitch S₂ der B-Seite aufgrund eines gravierenden Fehlers einen Totalausfall erleidet. Der Totalausfall wird vom wiederhochgelaufenen Softswitch S₂ bemerkt, der die (unidirektionale) Bearerverbindung über die Meldung MGCP TIME OUT ausser Betrieb nimmt.

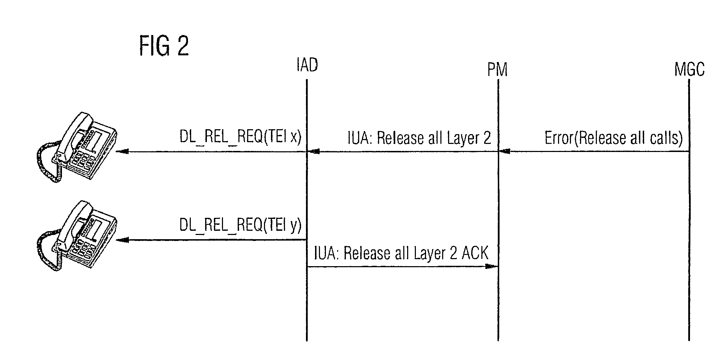

Im folgenden wird nun - wie in Fig. 2 aufgezeigt - vorgesehen, zunächst eine Fehlermeldung ERROR (RELEASE ALL CALLS) des Media Gateway Controllers MGC zu einem Programm PM, das die Funktionalität zum Abschluß der ISDN Schicht 3 aufweist, abzusetzen. Beide Funktionalitäten - sowohl der Media Gateway Controller MGC sowie das die Funktionalität PM - sind Teil des Softswitches S₂. Die Funktionalität PM stellt somit den Signalling Endpoint für alle IUA Meldungen dar.

In der Funktionalität PM des Softswitches S₂ wird nun erfindungsgemäss eine IUA Meldung "RELEASE ALL LAYER 2" erzeugt, die dem Media Gateway IAD der B-Seite zugeführt wird. Vom Softswich S₁ der A-Seite wird der Ausfall des Softswitches der B-Seite über bekannte Mechanismen erkannt und daraufhin die relevanten Signalisierungsverbindungen der A-Seite zurückgesetzt. Die IUA Protokoll-Meldung "RELEASE ALL LAYER 2" wird vom Media Gateway IAD der Funktionalität PM quittiert. Zum Identifizieren des Ports wird die IID (Interface Identifier) verwendet.

Die IUA Meldung "RELEASE ALL LAYER 2" wird im Media Gateway IAD in ISDN Schicht 2 Meldungen DL_REL_REQ (TEIₓ ... TEI_{y}) umgesetzt, wo die entsprechende Verbindung mit dem ISDN Endgerät zurückgesetzt wird. Dies ist möglich, da im Media Gateway IAD das Wissen um alle TEI noch vorhanden ist. Der IUA Meldung "RELEASE ALL LAYER 2" ist die Klasse 0 Management (MGMT) zugewiesen, einer der von IETF reservierten Werte kann als Message Type verwendet werden (z. B. 5 als nächster freier Wert). Weitere Parameter sind nicht nötig.

## Patentansprüche

1. Verfahren zur Steuerung von ISDN Endgeräten, die paketbasiert über ein Internetnetz (IP) angeschlossen sind, und die Signalisierungsinformationen über das IUA Signalisierungsprotokoll austauschen,
**dadurch gekennzeichnet,**
**dass** eine Meldung im IUA Signalisierungsprotokoll vorgesehen wird, der die Klasse 0 Management zugewiesen wird und mit deren Hilfe mehr als eine ISDN Verbindung in einen definierten Anfangszustand gesetzt wird.

2. Verfahren nach Anspruch 1,
**dadurch gekennzeichnet,**
**dass** die IUA Meldung in einem Media Gateway (IAD) in ISDN Schicht 2 Meldungen umgesetzt wird, von der die entsprechenden ISDN Verbindungen zusammen mit den zugeordneten ISDN Endgeräten in einen definierten Anfangszustand gesetzt werden.

## Claims

1. Method for controlling ISDN terminals which are connected in a packet-based manner via an internet network (IP) and which exchange signalling information using the IUA signalling protocol,
**characterized in that** a message is provided in the IUA signalling protocol to which Class 0 Management is assigned and with the aid of which more than one ISDN connection is set to a defined initial state.

2. Method according to Claim 1,
**characterized in that** the IUA message is converted in a media gateway (IAD) into corresponding ISDN Layer 2 messages with which the respective ISDN connections as well as the associated ISDN terminals are set to a defined initial state.

## Revendications

1. Procédé pour commander des terminaux ISDN, qui sont raccordés sur la base de paquets par un réseau Internet (IP), et qui échangent les informations de signalisation par le protocole de signalisation IUA,
**caractérisé en ce que**
dans le protocole de signalisation IUA est prévu un message auquel la classe 0 Management est attribuée et à l'aide duquel plus d'une liaison ISDN est placée dans un état initial défini.

2. Procédé selon la revendication 1,
**caractérisé en ce que**
le message IUA est converti dans une Media Gateway (IAD) en messages ISDN couche 2, messages par lesquels les liaisons ISDN correspondantes sont placées conjointement avec les terminaux ISDN attribués dans un état initial défini.
